# EUROPÄISCHE PATENTSCHRIFT

(11) **EP 0 592 489 B1**
(45) Veröffentlichungstag und Bekanntmachung des Hinweises auf die Patenterteilung: **13.03.1996**
(21) Anmeldenummer: 92913287.6
(22) Anmeldetag: 27.06.1992
(51) Int. Cl.: C09J 4/00, C09J 4/06

(54) **REAKTIONSSATZ ZUM ERZEUGEN VON KUNSTHARZKÖRPERN ZUR KLEBEVERANKERUNG VON BEFESTIGUNGSELEMENTEN IN BEFESTIGUNGSGRUND**
REAGENT KIT FOR THE PRODUCTION OF SYNTHETIC-RESIN ELEMENTS FOR BONDING FIXATION ELEMENTS IN PLACE IN AN ATTACHMENT SURFACE
ENSEMBLE DE REACTION POUR LA PRODUCTION D'ELEMENTS EN RESINE SYNTHETIQUE EN VUE DE L'ANCRAGE PAR COLLAGE D'ELEMENTS DE FIXATION DANS UN SUPPORT

(30) Priorität: 02.07.1991 DE 4121832
(43) Veröffentlichungstag der Anmeldung: 20.04.1994
(73) Patentinhaber: UPAT GMBH & CO, D-79312 Emmendingen (DE)
(72) Erfinder: WEBER, Christian, D-7830 Emmendingen (DE); GRÜN, Jürgen, D-7805 Bötzingen (DE); WASMER, Elke, D-7830 Emmendingen (DE)
(74) Vertreter: Sternagel, Hans-Günther, Dr.
(86) Internationale Anmeldenummer: EP9201451
(87) Internationale Veröffentlichungsnummer: WO9301246

(56) Entgegenhaltungen:
- EP-A- 0 199 671
- FR-A- 2 381 072
- FR-A- 2 505 347

## Beschreibung

Die Erfindung betrifft einen Reaktionssatz zum Erzeugen von Kunstharzkörpern für die Verankerung von Befestigungselementen in Befestigungsgrund, der insbesondere in Kartuschen oder zerstörbaren Mehrkammerpatronen verwendet werden kann.

Seit langem ist es bekannt, zur sicheren Befestigung von Ankerstangen und dergleichen in gewachsenem Fels, Mauerwerk, Beton und ähnlichem aushärtende Kunstharze einzusetzen.

Dabei werden die Ausgangskomponenten des Kunstharzes und ein geeigneter Härter getrennt von einander an den Befestigungsort gebracht und dort durch das Eintreiben des Befestigungselementes gemischt. Die Bildung des gebildeten Kunstharzkörpers, der das Befestigungselement mit dem Befestigungsgrund verklebt, wird damit erst in Gang gesetzt, wenn sich das Befestigungselement in seiner Endlage befindet.

Bei der Verwendung von Reaktionssätzen in sogenannten Einkomponentenkartuschen ist der Härter für das Kunstharz in durch Druck zerstörbaren Kapseln eingeschlossen und in der Kartusche mit den anderen Bestandteilen des Reaktionssatzes, d.h. einem härtbaren Kunstharz, Füllstoffen, ohne daß die Kapseln zerstört werden, vermischt. Der Reaktionssatz wird aus der Kartusche in das vorbereitete Bohrloch eingebracht und anschließend das Befestigungselement in das Bohrloch eingetrieben. Dabei erfolgt die Zerstörung der Kapseln und Verteilen des Härters in der Reaktionsmischung.

Im Falle von zerstörbaren Mehrkammerpatronen werden diese in das Bohrloch eingebracht und durch Eintreiben der Befestigungselemente, beispielsweise Ankerstangen zerstört. Dabei werden die Bestandteile miteinander gemischt und die Härtungsreaktion des Kunstharzes ausgelöst.

Die weite Verbreitung verdankt diese Technik der bequemen Anwendung und der erleichterten Lagerung, Transport und Dosierung der reaktiven Ausgangsmaterialien des Kunstharzkörpers.

Patronen, die Reaktionsmischungen für die Herstellung gehärteter Kunststoffkörper enthalten, wurden bereits in der DE-A-12 05 038 im Zusammenhang mit einem Verfahren zur Befestigung von Ankerstangen ohne Spreitzkopf beim Ankerausbau von Grubenräumen beschrieben. Es handelt sich um Glas- oder Bakelitpatronen, in deren Füllung aus aushärtbaren Polyester- oder Epoxyharz eine größere Gewichtsmenge Quarzsand oder -mehl eine Kapsel eingebracht ist, die den Härter enthält. Als Härter dienen organische Peroxide. Werden vorbeschleunigte Epoxidharze eingesetzt, so macht man von einem Aminhärter Gebrauch. Die vorbeschleunigten Epoxidharze härten mit Aminen langsam aus, so daß dann, wenn eine schnelle Belastbarkeit des Befestigungselementes gefordert ist, Glaspatrone und Ankerstange auf Temperaturen über 150°C vorgewärmt werden müssen. Peroxidgehärtete Polyesterharze sind nicht ausreichend chemikalienbeständig, insbesondere nicht alkalibeständig. Insbesondere bei basischem Befestigungsgrund führt dies auf die Dauer zur Minderung der mechanischen Eigenschaften des Kunststoffkörpers. Darüberhinaus zeigen derartig gehärtete Polyesterharze auch eine relative hohe Wasseraufnahme, die auch im Zusammenhang mit metallischen Befestigungselementen zu Korrosionsproblemen Anlaß geben kann.

Um die Nachteile derartiger bekannter Materialien auszuschalten, wurden in der EP-A-150 555 Zweikammerpatronen vorgeschlagen, bei denen sich ein feinkörniger natürlicher oder künstlicher mineralischer Füllstoff zusammen mit einem Vinylesterepoxyharz auf Acrylat- oder Methacrylatbasis in der inneren oder äußeren Kammer einer aus zwei ineinandergesteckten Glaszylindern aufgebauten Zweikammerpatrone befinden, während sich der Härter, ein organisches Peroxid, in der jeweils anderen Kammer befindet. Die Besonderheit der Patronen nach EP-A-150 555 liegt darin, daß die Harzkomponente zusätzlich ein Ester eines Epoxyharzes mit Acryl- oder Methacrylsäure gelöst in einem reaktiven Monomer enthält. Die Lagerbeständigkeit des vorbeschleunigten Vinylesterepoxyharzes hat sich jedoch als unbefriedigend erwiesen.

Eine erhebliche längere Lagerbeständigkeit weisen die aus WO-88/03599 bekannten vorbeschleunigten Harzkomponenten für einen derartigen Reaktionssatz auf. Durch Mischen von 3 bis 60 Gewichtsteilen eines Vinylesterepoxyharzes, 63 bis 3 Gewichtsteilen eines ungesättigten Polyesterharzes und 10 bis 0,1 Gewichtsteilen eines konventionellen Epoxidharzes, zusammen mit 28 bis 45 Gewichtsteilen eines oder mehrer ethylenisch ungesättigter reaktiver Monomerer erhöht sich die Lagerbeständigkeit erheblich.

In EP-A-199 671 ist die Verwendung eines härtbaren Acrylats, das durch Umsetzen von Acrylsäurederivaten mit Epoxidgruppen aufweisenden Bisphenol- und/oder Novolakverbindungen gelöst im Reaktivverdünner, bevorzugt Styrol, erhalten wird, für Mehrkammerpatronen beschrieben. Insbesondere handelt es sich um Bisphenol-A-Methylmethacrylat der Formel

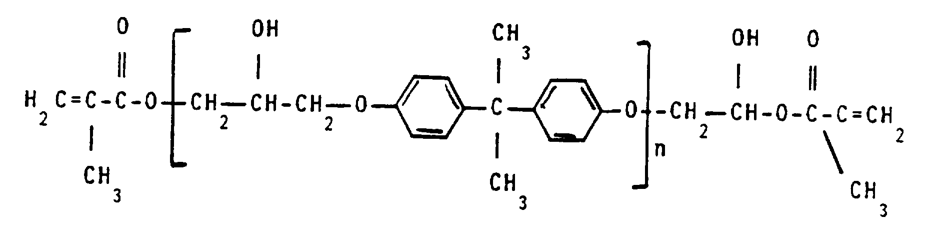

wobei n Werte von 1 bis 2 aufweist.

DE-A-39 40 138 (A1) beschreibt die Verwendung von durch Polymerisation härtbaren, einfach oder mehrfach durch ethylenisch ungesättigte Reste substituierten Cycloaliphaten in bzw. als Dübelmassen, die sich durch niedrige Viskosität, extrem niedrige Flüchtigkeit, extrem hohen Siedepunkt, hohen Flammpunkt, niedere Toxizität, Hydrophobie sowie durch hohe Verträglichkeit mit vielen Polymeren und Harzen auszeichnen. Dadurch wird eine geringere Eigenschrumpfung sowie hohe hydrolytische Stabilität auch unter alkalischen und sauren Konditionen der gehärteten Masse erreicht.

Trotz der Verbesserung der Eigenschaften in Hinsicht der chemischen Beständigkeit und der geringen Wasseraufnahme, haben die bekannten Harze einen relativ großen Volumenschwund nach der Aushärtung.

Aufgabe der vorliegenden Erfindung ist es, die bekannten Reaktionssätze weiter zu verbessern, insbesondere Kunstharzkörper zu schaffen, die einen niedrigen Volumenschwund bei Aushärten und geringe Wasseraufnahme aufweisen und gleichzeitig gute chemische Beständigkeit haben.

Diese Aufgabe wird gelöst durch einen Reaktionssatz zum Erzeugen von Kunstharzkörpern für die Verankerung von Befestigungselementen in Befestigungsgrund, wobei im Reaktionssatz vorhanden sind:
(a) eine Reaktionsmischung, die mindestens ein ethylenisch ungesättigtes Monomer enthält,
(b) eine Härterkomponente aus einem organischen Peroxid und
(c) eine Füllstoffkomponente, wobei die Härterkomponente (b) vor der Verwendung von der Reaktionsmischung (a) getrennt ist, dadurch gekennzeichnet, daß die Reaktionsmischung in (a) 51,0 bis 100,00 Gewichtsteile monomeres 2,2-Bis-[4-(Methacryloxy-ethoxy)phenyl]propan, 49,0 bis 0,0 Gewichtsteile ungesättigtes Polyesterharz, Vinylesterharz, Acrylharz oder eine Mischung derselben enthält.

Die Unteransprüche richten sich auf bevorzugte Ausführungsformen der Erfindung.

Vorzugsweise enthält die Reaktionsmischung (a) 75 bis 99 Gewichtsteile des speziellen monomeren Propanderivates und 25 bis 1 Gewichtsteile der vorstehend genannten Polymerharze und 0,1 bis 5,0 Gewichtsteile Beschleunigungsmittel.

Die gesamten Gewichtsteile der Reaktionsmischung ergeben vorzugsweise jeweils 100 Gewichtsteile.

Ein besonderer Vorteil einer Ausführungsform der erfindungsgemäßen Reaktionsmischung besteht darin, daß sie neben dem speziellen monomeren Propanderivat keine weiteren reaktiven Monomeren enthält. Insbesondere enthält diese erfindungsgemäße Reaktionsmischung im Gegensatz zu zahlreichen bekannten Reaktionsmischungen kein monomeres Styrol.

Bei einer anderen Ausführungsform der Erfindung kann die Reaktionsmischung auch noch andere reaktive ethylenisch ungesättigte Monomere enthalten.

Bei einer weiteren Ausführungsform ist die Reaktionsmischung vorbeschleunigt, um bei Kontakt mit der Härterkomponente eine rasche Aushärtungsreaktion zu erhalten. Als Beschleuniger können verwendet werden Diethylanilin, Dimethylanilin, N,N-Dimethyltoluidine, 4,4-Bis(dimethylamino)diphenylmethan, Kobaltnaphthenat, Kobaltoktoat oder Mischungen derselben. Die Reaktionsmischung (a) enthält 51,0 bis 98,0 Gewichtsteile monomeres, 2,2-Bis-[4-(Methacryloxyethoxy)phenyl]propan, 0,0 bis 48,9 Gewichtsteile ungesättigtes Polyesterharz, Vinylesterharz, Acrylharz oder eine Mischung derselben und 0,1 bis 5,0 Gewichtsteile Beschleunigungsmittel.

Die erfindungsgemäße Reaktionsmischung kann zusätzlich noch ein oder mehrere flüssige, nicht-reaktive organische Verdünnungsmittel enthalten, um die Viskosität der Reaktionsmischung in den gewünschten Bereich zu bringen und ggf. auch die Flexibiliät des beim Aushärten entstehenden Kunstharzkörpers zu verändern.

Geeignete nicht-reaktive organische Verdünnungsmittel sind Aceton, Dimethylformamid, Toluol, Methylethylketon (MEK), Dibutylphthalat, Dimethylphthalat, Dihexylphthalat oder eine Mischung derselben.

In einem solchen Falle enthält die vorbeschleunigte Reaktionsmischung (a) bezogen auf Gesamtgewicht von (a) 51 bis 99,9 Gewichtsteile spezielles monomeres Propanderivat,
39 bis 0,0 ungesättigtes Polyesterharz, Vinylesterharz, Acrylharz oder eine Mischung derselben, 0,1 bis 5,0 Gewichtsteile Beschleunigungsmittel und
0 bis 10 Gewichtsteile eines oder mehrerer flüssigen(r) nicht-reaktiven(r) organischer Verdünnungsmittel(s).

Vorzugsweise enthält die Reaktionsmischung bis 5 Gewichtsteile nicht-reaktives Verdünnungsmittel und entsprechend mehr Monomer und/oder ungesättigtes Polyesterharz, Vinylesterharz, Acrylharz oder eine Mischung derselben.

Die Reaktionsmischung (a) kann, wenn auch nicht bevorzugt, zusätzlich weitere andere reaktive Monomere enthalten, wie Styrol, Methylmethacrylat, Ethylmethacrylat, α-Methylstyrol, Chlorstyrol, Butylacrylat, Diallylphthalat, Trimethylolpropantrimethacrylat, Dicyclopentenyloxylethylmethacrylat, 3,3,5-Trimethylcyclohexylmethacrylat, Benzylmethacrylat.

In einem solchen Falle enthält die vorbeschleunigte Reaktionsmischung (a) bezogen auf Gesamtgewicht von (a) 51 bis 99,9 Gewichtsteile spezielles monomeres Propanderivat, 24 bis 0,0 Gewichtsteile ungesättigtes Polyesterharz, Vinylesterharz, Acrylharz oder eine Mischung derselben, 0,1 bis 5,0 Gewichtsteile Beschleunigungsmittel und 25 bis 0 Gewichtsteile eines oder mehrerer anderer reaktiver ethylenisch ungesättigter Monomere(n).

Es ist grundsätzlich auch möglich, daß die Reaktionsmischung sowohl nicht-reaktive(s) Verdünnungsmittel und weitere andere reaktive(s) Monomere(s) enthält. Bei einer solchen Ausführungsform der Erfindung enthält die vorbeschleunigte Reaktionsmischung (a) bezogen auf Gesamtgewicht von (a) 51 bis 99,9 Gewichtsteile spezielles monomeres Propanderivat, 24 bis 0,0 Gewichtsteile ungesättigtes Polyesterharz, Vinylesterharz, Acrylharz oder eine Mischung derselben, 0,1 bis 5,0 Gewichtsteile Beschleuniger, 10 bis 0 Gewichtsteile nicht-reaktive(s) flüssige(s) organische(s) Verdünnungsmittel und 15 bis 0 Gewichtsteile eines oder mehrerer anderer ethylenisch ungesättigter Monomeren.

Geeignete ungesättigte Polyesterharze sind ungesättigte Polyester, die auf der Basis von zwei basischen Säuren wie Maleinsäure, o-Phthalsäure und/oder m-Phthalsäure oder Isophthalsäure mit einem zweiwertigen Alkohol wie Ethylenglykol und/oder Propylenglykol hergestellt sind. Die ungesättigten Polyesterharze härten oder setzen ihre Polymerisation zu höhermolekularen festen Polymeren fort, wenn sie in Kontakt mit einem Härter gebracht werden. Üblicherweise enthalten die Polyesterharze ein Verdünnungsmittel, das ein ethylenisch ungesättigtes Monomer, wie Styrol sein kann.

Um eine besonders umweltfreundliche Reaktionsmischung herzustellen, sind ungesättigte Polyesterharze bevorzugt, die kein Styrol enthalten. Die Esterzahl der Polyester soll vorzugsweise im Bereich von 250 bis 460 mg KOH/g Polyesterharz betragen. Die Bestimmung der Esterzahl erfolgt nach DIN 53401.

Geeignete Vinylesterharze sind solche die durch Umsetzung von Polyepoxiden mit ethylenisch ungesättigten Monocarbonsäuren erhalten werden. Die bekannten Polyepoxide, wie Glycidylether von mehrwertigen Alkoholen und mehrwertigen Phenolen, Epoxynovolak, epoxidierten ungesättigten Polyestern können für die Herstellung der Vinylesterharze verwendet werden, solange sie mehr als eine Epoxidgruppe pro Molekül enthalten. Die Polyepoxide können Monomere oder Polymere sein. Geeignete ungesättigte Carbonsäuren für die Umsetzung mit Polyepoxiden sind α,β-ungesättigte Monocarbonsäuren wie Acrylsäure, Methacrylsäure, Crotonsäure.

Besonders bevorzugte Polyepoxide für die Umsetzung mit ethylenisch ungesättigten Monocarbonsäuren sind Bisphenol-A-Epoxidharze, Bisphenol-F-Epoxidharze, Novolakepoxidharze, halogenierte Bisphenoltyp Epoxidharze, Polyglycidylestertyp Epoxidharze wie Diglycidylphthalat, Polyglycidylethertyp Epoxidharze wie ein Glycidylether eines aliphatischen Alkohols. Ggf. können die sekundären Hydroxylgruppen der Vinylesterharze mit einem Dicarbonsäureanhydrid umgesetzt sein, um anhängende Halbestergruppen auszubilden.

Die bevorzugten styrolfreie Vinylesterharze oder Vinylesterepoxyharze haben eine mittlere Molmasse von 450 bis 1200 Dalton. Die Vinylesterharze haben vorzugsweise eine Esterzahl von 90 bis 240 g KOH/g Harz. Die Esterzahl wird bestimmt, wie bereits beschrieben nach DIN 53401 bestimmt. Als Acrylharz kann beispeilsweise Polymethylmethacrylat (PMMA), Partikelgröße 0,1 mm, evtl. in Methylacrylat teilweise gelöst verwendet werden.

Der Hauptbestandteil der erfindungsgemäßen Reaktionsmischung ist ein bifunktionelles selbstvernetzendes Monomer der Formel 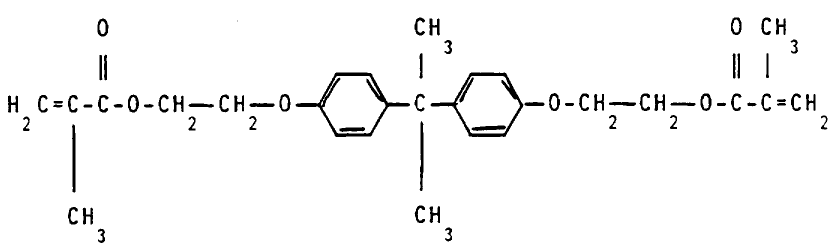 das dem gebildeten Harzkörper einen überraschend geringen Volumenschwund von 1 bis 2 Prozent verleiht. Der Harzkörper hat aber auch eine hervorragende chemische Beständigkeit gegenüber der Einwirkung von Säuren und Basen und ein geringes Wasseraufnahmevermögen. Ebenso ist eine hohe Wärmestandfestigkeit vorhanden.

Um bei Verwendung mit Mehrkammerpatronen oder Kartuschen die zum Einbringen der Härterkomponente erforderliche niedrige Viskosität zu erreichen, weist die Reaktionsmischung (a) bei 25°C vorzugsweise eine Viskosität von 300 mPa.s bis 10000 mPa.s auf.

Geeignete Peroxidhärter sind Benzoylperoxid, Lauroylperoxid, p-Butylhydroperoxid, p-Butylperbenzoat, Methylethylketonperoxid.

Als Füllstoffkomponente wird (werden) der erfindungsgemäßen Reaktionsmischung Füllstoff(e) zugesetzt. Bevorzugte Füllstoffe sind Quarzsand, Magnesia, Klinker, Marmormehl, Calziumcarbonat, Glasperlen. Die Korngröße der Füllstoffe liegt im Bereich von 0,001 bis 5 mm.

Im Falle von durch Druck zerstörbaren Mehrkammerpatronen beträgt das Gewichtsverhältnis des Gesamtreaktionssatzes vorzugsweise
- 20 bis 50: Gewichtsteile Patronenglas,
- 18 bis 25: Gewichtsteile vorbeschleunigte Reaktionsmischung
- 0,4 bis 1,5: Gewichtsteile Peroxidhärter und
- 30 bis 55: Gewichtsteile Füllstoffkomponente.

Im Falle von Kartuschen mit eingekapseltem Peroxidhärter beträgt das Gewichtsverhältnis des Gesamtreaktionssatzes vorzugsweise
(a)
   - 35 bis 50: Gewichtsteile vorbeschleunigte Reaktionsmischung
   - 1 bis 8,0: Gewichtsteile Thixotropiermittel
   - 50 bis 65: Gewichtsteile Füllstoffkomponente
   - 1 bis 8,0: Gewichtsteile eingekapselte Peroxidhärter
   - 0,5 bis 4,0: Gewichtsteile Thixotropierhilfe
(b)
   - 35 bis 50: Gewichtsteile Reaktionsmischung
   - 1 bis 8,0: Gewichtsteile Thixotropiermittel
   - 50 bis 65: Gewichtsteile Füllstoffkomponente
   - 0,2 bis 1,6: Gewichtsteile eingekapselte Aminbeschleuniger
   - 1 bis 8,0: Gewichtsteile eingekapselte Peroxidhärter
   - 0,5 bis 4,0: Gewichtsteile Thixotropierhilfe

Geeignetes Thixotropierungsmittel ist beispielsweise Kieselsäure (Aerosil 200).

Geeignete Thixotropierungshilfen sind beispielsweise Polyhydroxycarbonsäureamid-Lösungen (Byk-R 605 von Byk-Chemie) und Glycerin.

Der geringe Volumenschwund der mit der erfindungsgemäßen Reaktionsmischung hergestellten Harzkörper zur Klebeverankerung von Befestigungselementen wird aus folgenden Vergleichen deutlich.

Volumenschwund der Prüfkörper aus den bekannten Reaktionsmischungen und nach der erfindungsgemäßen Reaktionsmischung.

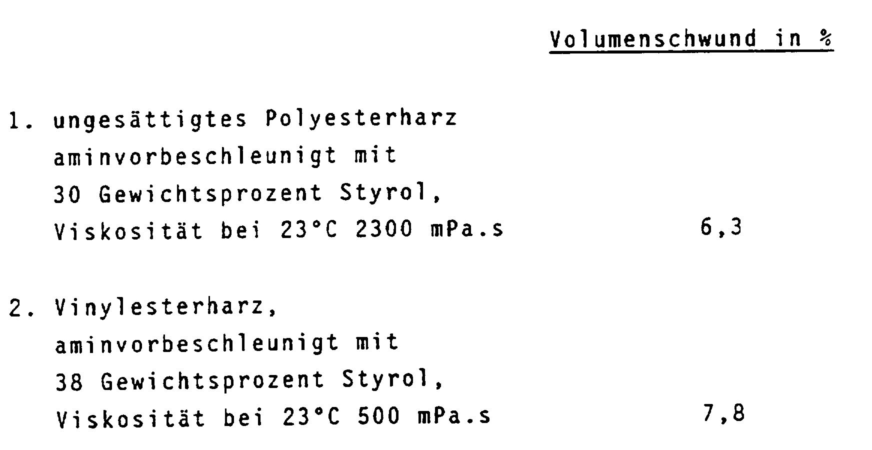

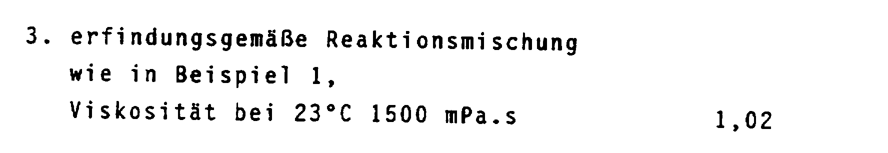

Die Erfindung wird nun anhand der nachfolgenden Beispiele noch näher beschrieben.

### Beispiel 1

### Patrone der Größe H12/Ankerstange

Reaktionsmischung (a) 3,6 g 2,2-Bis[4-(Methacryloxy-Ethoxy)phenyl]propan wird mit 0,03 Gewichtsteile Dimethylparatoluidine vorbeschleunigt und mit 9,2 g Quarzsand (Korngröße 0,04 bis 0,7 mm) gemischt. Als Härterkomponente dient in der zweiten Kammer 0,4 g Dibenzoylperoxyd (20 Prozent in Gips phlegmatisiert).

Die Mehrkammerpatrone weist insgesamt 5,4 g Patronenglas auf.
Ankerstange M 12 x 160, Gewindestangenqualität 12.9

Nach einer Aushärtzeit von 0,5 Stunden bei Raumtemperatur werden folgende Festigkeitswerte in Beton ermittelt:
Beton: B25, Istfestigkeit 27 N/mm
mittlerer Auszugswert 80 kN
Verbundspannung: 16,2 N/mm
Versagen: Verbundbruch

### Beispiel 2

### Patrone der Größe M12/Ankerstange

3,6 g spezielles Propanderivat wie in Beispiel 1 werden mit 8 Gewichtsteile Vinylester, styrolfrei, EZ = 133 mg KOH/g ungesättigten Polyesterharz, styrolfrei, EZ = 360 mg KOH/g und 0,04 g Dimethylparatoluidine zu einer vorbeschleunigten Reaktionsmischung formuliert.

Als Füllstoffkomponente werden 9,2 g Quarzsand (mittlere Korngröße 1,2 bis 1,8 mm) verwendet.

In der anderen Kammer der Zweikammerpatrone sind 0,25 g Dibenzoylperoxid (50 Prozent in N-Phthalat phlegmatisiert) enthalten. Die Gesamtmenge an Patronenglas beträgt 5,4 g.
Ankerstange: M 12 x 160, Gewindestangenqualität 9.8

Nach einer Aushärtzeit von 1 Stunde bei Raumtemperatur werden folgende Festigkeitswerte erhalten:
Beton: B25, Istfestigkeit 27 N/mm
mittlerer Auszugswert 84 kN
Verbundspannung: 17 N/mm (Güte der Ankerstange)
Versagen: Ankerstangenbruch

### Beispiel 3

### Patrone der Große M12/Ankerstange

3,6 g spezielles monomeres Propanderivat vorbeschleunigt wie in Beispiel 1 werden mit 0,36 g erhältlichem ungesättigten Polyester, styrolfrei, EZ = 440 mg KOH/g und 0,18 g Aceton zu einer Reaktionsmischung formuliert und mit 9,0 g Quarzsand (Korngröße 1,2 bis 1,8 mm) gemischt und in die Außenkammer der Patrone eingefüllt.

Die zweite Kammer enthält 0,35 g Dibenzoylperoxid (30 Prozent in inertem Füllstoff und Phthalat phlegmatisiert). Der Anteil an Patronenglas am Reaktionssatz beträgt 5,4 g.
Ankerstange: M 12 x 160, Gewindestangenqualität 9.8

Nach einer Aushärtzeit von 1 Stunde bei Raumtemperatur werden folgende Festigkeitswerte ermittelt:
Beton: B25, Istfestigkeit 27,4 N/mm
mittlerer Auszugswert 84 kN
Verbundspannung: 17 N/mm
Versagen: Verbundbruch

### Beispiel 4

2,6 g spezielles Propanderivat werden mit 0,72 g Vinylester, styrolfrei, EZ = 140 mg KOH/g und 0,72 g Methylmethacrylat und 0,1 g N,N-Dimethyl-p-toluidin zu einer vorbeschleunigten Reaktionsmischung formuliert.

Als Füllstoffkomponente werden 9,0 g Quarzsand (Korngröße 1,2 bis 1,8 mm) verwendet.

In der anderen Kammer der Zweikammerpatrone sind 0,26 g Härter (50 Gewichtsprozent Benzoylperoxid phlegmatisiert in Phthalat).

Anteil Patronenglas an Reaktionssatz beträgt 5,4 g.
Ankerstange: M 12 x 160, Gewindestangenqualität 9.8

Nach einer Aushärtzeit von 0,5 Stunden bei Raumtemperatur werden folgende Festigkeitswerte ermittelt:
Beton: B 50
mittlerer Auszugswert >81 kN
Verbundspannung: 16,4 N/mm
Versagen: Stahlbruch

### Beispiel 5

3,4 g spezielles Propanderivat werden mit 0,21 g Weichmacher (Phthalsäurepolyester) und 0,63 g Vinylester, styrolfrei, EZ = 109 mg KOH/g und 0,02 g N,N-Dimethyl-p-toluidin zu einer vorbeschleunigten Reaktionsmischung formuliert.

Als Füllstoffkomponente werden 9,0 g Quarzsand (Korngröße 1,2 bis 1,8 mm) verwendet.

In der anderen Kammer der Zweikammerpatrone sind 0,35 g Dibenzoylperoxid (30 Gewichtsprozent phlegmatisiert in inertem Füllstoff und Phthalat).

Anteil Patronenglas an Reaktionssatz beträgt 5,4 g.
Ankerstange: M 12 x 160, Gewindestangenqualität 9.8

Nach einer Aushärtzeit von 0,5 Stunden bei Raumtemperatur werden folgende Festigkeitswerte ermittelt:
Beton: B 50
mittlerer Auszugswert >85 kN
Verbundspannung: 17,2 N/mm
Versagen: Stahlbruch

### Beispiel 6

2,59 g spezielles Propanderivat werden mit 0,63 g Styrol und 0,95 g Vinylester EZ = 109 mg KOH/g und 0,034 g N,N-Dimethyl-p-toluidin zu einer vorbeschleunigten Reaktionsmischung formuliert.

Als Füllstoffkomponente werden 8,8 g Glasperlen (Korngröße 0,6 bis 2 mm) verwendet.

In der anderen Kammer der Zweikammerpatrone sind 0,25 g Härter (50 Gewichtsprozent Benzoylperoxid phlegmatisiert in Phthalat).

Patronenglasanteil an Reaktionssatz beträgt 5,5 g.
Ankerstange: M 12 x 160, Gewindestangenqualität 9.8

Nach einer Aushärtzeit von 20 Minuten bei Raumtemperatur werden folgende Festigkeitswerte ermittelt:
Beton: B 50, Istfestigkeit 27,4 N/mm
mittlerer Auszugswert 84 kN
Verbundspannung: 17 N/mm
Versagen: Verbundbruch

### Beispiel 7

3,35 g spezielles Propanderivat werden mit 0,2 g Polymethylmethacrylat (Partikelgröße 0,1 mm), 0,4 g Methylmethacrylat und 0,03 g N,N-Dimethyl-p-toluidin zu einer vorbeschleunigten Reaktionsmischung formuliert.

Als Füllstoffkomponente werden 9,9 g Quarzsand (Korngröße 1,2 bis 1,8 mm) verwendet.

In der anderen Kammer der Zweikammerpatrone sind 0,35 g Dibenzoylperoxid (30 Gewichtsprozent phlegmatisiert in inertem Füllstoff und Phthalat).

Patronenglasanteil an Reaktionssatz beträgt 5,5 g.
Ankerstange: M 12 x 160, Gewindestangenqualität 12,9.

Nach einer Aushärtzeit von 0,5 Stunden bei Raumtemperatur werden folgende Festigkeitswerte ermittelt:
Beton: B 50, Istfestigkeit 54,2 N/mm
mittlerer Auszugswert 99,9 kN
Verbundspannung: 20,4 N/mm
Versagen: Verbundbruch

### Beispiel 8

- 73,4 g: spezielles Propanderivat werden mit
- 9,63 g: Vinylester, EZ = 133 mg KOH/g und
- 4,62 g: Weichmacher (Phthalsäurepolyester) und
- 0,32 g: Beschleuniger (N,N-Dimethyl-p-toluidin)
- 4,4 g: Thixotropiermittel
- 2,0 g: Thixotropierhilfe

- 9,0 g: eingekapselter Härter (32 Gewichtsprozent Benzylperoxid phlegmatisiert in Phthalat)
- 96,0 g: Quarzsand (Korngröße 0,1 bis 0,5 mm)
zu einem einheitlichen Reaktionsharzmörtel vermischt und in eine Einkammerkartusche abgefüllt.

Die vermischte Masse wird in ein Bohrloch mit einem Durchmesser 14,3 mm eingeführt. Es wird eine Ankerstange M 12 mit mehreren Konen und eine Drahtsiebhülse eingesetzt.

Nach einer Aushärtzeit von 0,5 Stunden bei Raumtemperatur werden folgende Festigkeitswerte ermittelt:
Beton: B 25, Istfestigkeit 25,8 N/mm
Versagen: Ankerstangenbruch

### Beispiel 9

- 73,4 g: spezielles Propanderivat werden mit
- 9,63 g: Vinylester, EZ = 133 mg KOH/g und
- 6,0 g: Methylacrylat und
- 0,38 g: eingekapselten Beschleuniger (70 Gewichtsprozent Diathylanilin und 30 Gewichtsprozent Dimethyl-p-toluidin)
- 6,0 g: Thixotropiermittel
- 6,0 g: eingekapselter Härter (50 Gewichtsprozent Benzoylperoxid phlegmatisiert in Phthalat)
- 100,0 g: Quarzsand (Korngröße 0,1 bis 1,2 mm)
zu einem einheitlichen Reaktionssatz vermischt und in einen Polyamid-Schlauch (Breite 26 mm) abgefüllt.

### Patronengewicht: ca. 28 g

Die Patrone wird in ein Bohrloch mit einem Durchmesser 17,0 mm eingeführt. Es wird eine Gewindeankerstange, Größe M 16, schlagdrehend, eingesetzt.

Nach einer Aushärtzeit von 0,5 Stunden bei Raumtemperatur werden folgende Festigkeitswerte ermittelt:
Beton: B 50, Istfestigkeit: 54,2 N/mm
mittler Auszugswert: 84 kN
Versagen: Ankerstangenbruch

## Patentansprüche

1. Reaktionssatz zum Erzeugen von Kunstharzkörpern für die Klebverankerung von Befestigungselementen in Befestigungsgrund, wobei im Reaktionssatz vorhanden sind:
(a) eine Reaktionsmischung, die mindestens ein ethylenisch ungesättigtes Monomer enthält,
(b) eine Härterkomponente aus einem organischen Peroxid und
(c) eine Füllstoffkomponente, wobei die Härterkomponente (b) vor der Verwendung von der Reaktionsmischung (a) getrennt ist,
**dadurch gekennzeichnet**
daß die Reaktionsmischung (a): 51 bis 100,0 Gewichtsteile monomeres 2,2-Bis-[4-(Methacryloxyethoxy)phenyl]propan,
49 bis 0,0 Gewichtsteile ungesättigtes Polyesterharz, Vinylesterharz, Acrylharz oder eine Mischung derselben enthält.

2. Reaktionssatz nach Anspruch 1,
**dadurch gekennzeichnet**
daß die Reaktionsmischung (a) 51 bis 98,0 Gewichtsteile monomeres 2,2-Bis-[4-(Methacryloxyethoxy)-phenyl]propan,
0,0 bis 48,9 Gewichtsteile ungesättigtes Polyesterharz, Vinylesterharz, Acrylharz oder eine Mischung derselben und 0,1 bis 5,0 Gewichtsteile Beschleunigungsmittel enthält.

3. Reaktionssatz nach Anspruch 1,
**dadurch gekennzeichnet**
daß die Reaktionsmischung (a) 51 bis 99,9 Gewichtsteile monomeres 2,2-Bis-[4-(Methacryloxyethoxy)-phenyl]propan,
39 bis 0,0 Gewichtsteile ungesättigtes Polyesterharz, Vinylesterharz, Acrylharz oder eine Mischung derselben und 0,1 bis 5,0 Gewichtsteile Beschleunigungsmittel und 10 bis 0 Gewichtsteile eines oder mehrerer flüssiger nicht-reaktiver organischer Verdünnungsmittel(s) enthält.

4. Reaktionssatz nach Anspruch 3,
**dadurch gekennzeichnet** daß das nicht-reaktive organische Verdünnungsmittel Aceton, Dimethylformamid, Toluol, MEK, Dibutylphthalat, Dimethylphthalat, Dihexylphthalat oder eine Mischung derselben ist.

5. Reaktionssatz nach Anspruch 1,
**dadurch gekennzeichnet**
daß die Reaktionsmischung (a) 51 bis 99,9 Gewichtsteile monomeres 2,2-Bis-[4-(Methacryloxyethoxy)-phenyl]propan,
24 bis 0,0 Gewichtsteile ungesättigtes Polyesterharz, Vinylesterharz, Acrylharz oder eine Mischung derselben, 0,1 bis 5,0 Gewichtsteile Beschleunigungsmittel und 25 bis 0 Gewichtsteile eines oder mehrerer anderen (anderer) reaktiver ethylenisch ungesättigten (ungesättigter) Monomere(n) enthält.

6. Reaktionssatz nach Anspruch 5,
**dadurch gekennzeichnet** daß die anderen reaktiven Monomeren Styrol, Methylmethacrylat, Ethylmethacrylat, Benzylmethacrylat oder eine Mischung derselben sind.

7. Reaktionssatz nach Anspruch 1,
**dadurch gekennzeichnet**
daß die Reaktionsmischung (a) 51 bis 99,9 Gewichtsteile monomeres 2,2-Bis-[4-(Methacryloxyethoxy)phenyl]propan,
24 bis 0,0 Gewichtsteile ungesättigtes Polyesterharz, Vinylesterharz, Acrylharz oder eine Mischung derselben und 0,1 bis 5,0 Gewichtsteilen Beschleunigungsmittel,
10 bis 0 Gewichtsteile nicht-reaktives organisches Verdünnungsmittel und 15 bis 0 Gewichtsteile eines oder mehrerer anderen (anderer) reaktiven (reaktiver) ethylenisch ungesättigten (ungesättigter) Monomere(n) enthält.

8. Reaktionssatz nach Anspruch 1,
**dadurch gekennzeichnet**
daß die Reaktionsmischung (a) 75 bis 99,9 Gewichtsteile monomeres 2,2-Bis-[4-(Methacryloxyethoxy)phenyl]propan,
25 bis 0,1 Gewichtsteile ungesättigtes Polyesterharz, Vinylesterharz, Acrylharz oder eine Mischung derselben und 0,1 bis 5,0 Gewichtsteile Beschleunigungsmittel enthält.

## Claims

1. Reagent kit for the production of synthetic resin bodies for bonding anchoring of fixing elements in a fixing base, the reagent kit comprising:
(a) a reaction mixture which comprises at least one ethylenically unsaturated monomer,
(b) a curing agent component of an organic peroxide and
(c) a filler component, the curing agent component (b) being separated from the reaction mixture (a) before use, characterised in that the reaction mixture (a) comprises: 51.0 to 100.00 parts by weight of monomeric 2,2-bis[4-lmethacryloxyethoxy)phenyl]propane, and 49.0 to 0.0 parts by weight of unsaturated polyester resin, vinyl ester resin or acrylic resin or a mixture thereof.

2. Reagent kit according to Claim 1, characterised in that the reaction mixture (a) comprises 51 to 98.0 parts by weight of monomeric 2,2-bis[4-methacryloxyethoxy)phenyl]propane, 0.0 to 48.9 parts by weight of unsaturated polyester resin, vinyl ester resin or acrylic resin or a mixture thereof and 0.1 to 5.0 parts by weight of accelerating agent.

3. Reagent kit according to Claim 1, characterised in that the reaction mixture (a) comprises 51 to 99.9 parts by weight of monomeric 2,2-bis[4-(methacryloxyethoxy)phenyl]propane, 39 to 0.0 parts by weight of unsaturated polyester resin, vinyl ester resin or acrylic resin or a mixture thereof, 0.1 to 5.0 parts by weight of accelerating agent and 10 to 0 parts by weight of one or more liquid non-reactive organic diluent(s).

4. Reagent kit according to Claim 3, characterised in that the non-reactive organic diluent is acetone, dimethylformamide, toluene, MEK, dibutyl phthalate, dimethyl phthalate, dihexyl phthalate or a mixture thereof.

5. Reagent kit according to Claim 1, characterised in that the reaction mixture (a) comprises 51 to 99.9 parts by weight of monomeric 2,2-bis[4-(methacryloxyethoxy)phenyl]propane, 24 to 0.0 parts by weight of unsaturated polyester resin, vinyl ester resin or acrylic resin of a mixture thereof, 0.1 to 5.0 parts by weight of accelerating agent and 25 to 0 parts by weight of one or more other reactive ethylenically unsaturated monomer(s).

6. Reagent kit according to Claim 5, characterised in that the other reactive monomers are styrene, methyl methacrylate, ethyl methacrylate, benzyl methacrylate or a mixture thereof.

7. Reagent kit according to Claim 1, characterised in that the reaction mixture (a) comprises 51 to 99.9 parts by weight of monomeric 2,2-bis[4-(methacryloxyethoxy)phenyl]propane, 24 to 0.0 parts by weight of unsaturated polyester resin, vinyl ester resin or acrylic resin or a mixture thereof, 0.1 to 5.0 parts by weight of accelerating agent, 10 to 0 parts by weight of non-reactive organic diluent and 15 to 0 parts by weight of one or more other reactive ethylenically unsaturated monomer(s).

8. Reagent kit according to Claim 1, characterised in that the reaction mixture (a) comprises 75 to 99.9 parts by weight of monomeric 2,2-bis[4-(methacryloxyethoxy)phenyl]propane, 25 to 0.1 parts by weight of unsaturated polyester resin, vinyl ester resin or acrylic resin or a mixture thereof and 0.1 to 5.0 parts by weight of accelerating agent.

## Revendications

1. Ensemble réactif pour la production de corps en résine synthétique pour l'ancrage-collage d'éléments de fixation dans un support, l'ensemble réactif contenant :
(a) un mélange réactionnel contenant au moins un monomère à insaturation éthylénique,
(b) un durcisseur de type peroxyde organique,
(c) une charge,
le durcisseur (b), avant utilisation, étant séparé du mélange réactionnel (a), caractérisé en ce que le mélange réactionnel (a) contient
- de 51 à 100,0 parties en poids de 2,2-bis-[4-(méthacryloxyéthoxy)phényl]propane monomère,
- de 49 à 0,0 parties en poids d'une résine acrylique, vinylique ou polyester insaturée, ou un mélange de celles-ci.

2. Ensemble réactif conforme à la revendication 1, caractérisé en ce que le mélange réactionnel (a) contient
- de 51 à 98,0 parties en poids de 2,2-bis-[4-(méthacryloxyéthoxy)phényl]propane monomère,
- de 0,0 à 48,9 parties en poids d'une résine acrylique, vinylique ou polyester insaturée, ou un mélange de celles-ci, et
- de 0,1 à 5,0 parties en poids d'un agent accélérateur.

3. Ensemble réactif conforme à la revendication 1, caractérisé en ce que le mélange réactionnel (a) contient
- de 51 à 99,9 parties en poids de 2,2-bis-[4-(méthacryloxyéthoxy)phényl]propane monomère,
- de 39 à 0,0 parties en poids d'une résine acrylique, vinylique ou polyester insaturée, ou un mélange de celles-ci,
- de 0,1 à 5,0 parties en poids d'un agent accélérateur, et
- de 10 à 0 parties en poids d'un ou de plusieurs diluant(s) organique(s) liquide(s) non réactif(s).

4. Ensemble réactif conforme à la revendication 3, caractérisé en ce que le diluant organique non réactif est de l'acétone, du diméthylformamide, du toluène, de la méthyléthylcétone, du phtalate de dibutyle, du phtalate de diméthyle, du phtalate de dihexyle ou un mélange de ceux-ci.

5. Ensemble réactif conforme à la revendication 1, caractérisé en ce que le mélange réactionnel (a) contient
- de 51 à 99,9 parties en poids de 2,2-bis-[4-(méthacryloxyéthoxy)phényl]propane monomère,
- de 24 à 0,0 parties en poids d'une résine acrylique, vinylique ou polyester insaturée, ou un mélange de celles-ci,
- de 0,1 à 5,0 parties en poids d'un agent accélérateur, et
- de 25 à 0 parties en poids d'un ou de plusieurs autre(s) monomère(s) réactif(s) à insaturation éthylénique.

6. Ensemble réactif conforme à la revendication 5, caractérisé en ce que les autres monomères réactifs sont choisis parmi le styrène, le méthacrylate de méthyle, le méthacrylate d'éthyle, le méthacrylate de benzyle ou un mélange de ceux-ci.

7. Ensemble réactif conforme à la revendication 1, caractérisé en ce que le mélange réactionnel (a) contient
- de 51 à 99,9 parties en poids de 2,2-bis-[4-(méthacryloxyéthoxy)phényl]propane monomère,
- de 24 à 0,0 parties en poids d'une résine acrylique, vinylique ou polyester insaturée, ou un mélange de celles-ci,
- de 0,1 à 5,0 parties en poids d'un agent accélérateur,
- de 10 à 0 parties en poids d'un diluant organique non réactif, et
- de 15 à 0 parties en poids d'un ou de plusieurs autre(s) monomère(s) réactif(s) à insaturation éthylénique.

8. Ensemble réactif conforme à la revendication 1, caractérisé en ce que le mélange réactionnel (a) contient
- de 75 à 99,9 parties en poids de 2,2-bis-[4-(méthacryloxyéthoxy)phényl]propane monomère,
- de 25 à 0,1 parties en poids d'une résine acrylique, vinylique ou polyester insaturée, ou un mélange de celles-ci,
- de 0,1 à 5,0 parties en poids d'un agent accélérateur.
